# EUROPEAN PATENT APPLICATION

(11) **EP 4 309 966 A1**
(43) Date of publication of application: **24.01.2024**
(21) Application number: 22185878.0
(22) Date of filing: 19.07.2022
(51) Int. Cl.: B60T 17/08

(54) **BRAKING SYSTEM**

(71) Applicant: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 85652 Pliening (DE); HÖS, Levente, 1047 Budapest (HU); HOLLOSI, Mate, 1097 Budapest (HU); KLINGNER, Matthias, 82275 Emmering (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU)

(57) **Abstract**

The invention relates to a braking system and in particular relates to a braking system and braking system provision method for braking of road vehicles. A braking system (20) for a vehicle, comprising: a rotatory braking element (22) that is fixedly connected to a wheel or wheel axle in a manner to rotate conjointly with the wheel having a rotational plane (222), a stationary braking element (24, 26) that is fixedly connected relative to a vehicle chassis such as not to rotate conjointly with the wheel, a first brake actuator (38) that is configured to actuate the stationary braking element (24, 26) such as to urge the stationary braking element (24, 26) towards the rotatory braking element (22), a second brake actuator (40) that is configured to actuate the stationary braking element (24, 26) such as to urge the stationary braking element (24, 26) towards the rotatory braking element (22), a lever (32) that is configured such that it transfers a force exerted by the first brake actuator (38) or the second brake actuator (40) to the stationary brake element (24, 26), wherein the first brake actuator (38) is connected to the lever (32) via a first connection portion (386) and the second brake actuator (40) is connected to the lever (32) via a second connection portion (406) such that the second brake actuator (40) operates decoupled from the first brake actuator (38) when the second brake actuator (40) is actuated.

## Description

The invention relates to a braking system and in particular relates to a braking system for road vehicles.

Commercial vehicles, like trucks, tractor units or trailers, comprise braking systems capable of applying braking forces to axles or wheels to decelerate the commercial vehicles during a driving operation or to secure the commercial vehicles against an unintended movement during non-driving operations. Such braking systems usually consist of a main braking system /service braking system and an auxiliary braking system / parking braking system. Usually, the main braking system /service braking system is intended to be used during operation of the vehicle and the auxiliary braking system serves as a backup braking system for the main braking system or provides a continuous locking function to maintain vehicle's position in particular when the vehicle is not operated.

Such braking systems and respective brake actuators are arranged near the axle or wheel to be decelerated or secured. However, the installation space near the axle or wheel is limited.

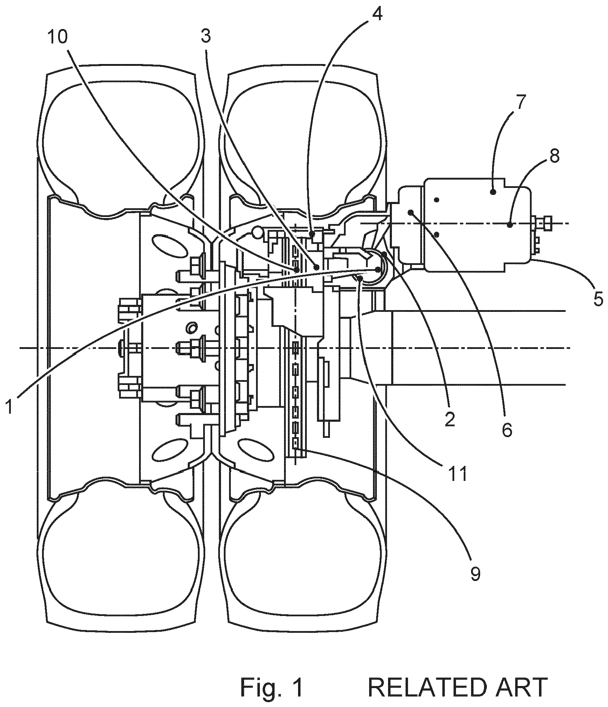

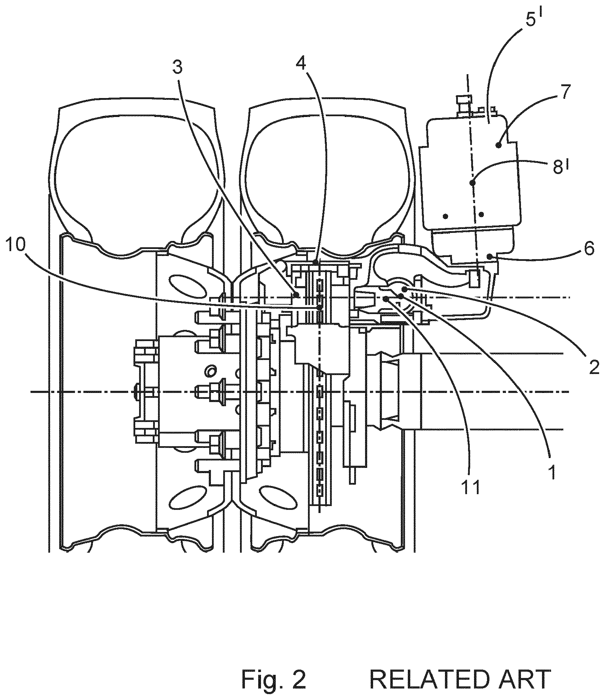

In the related art, braking systems are known that are disc brakes, i.e. the deceleration force is generated such that a rotatory braking element like a brake disc is fixed to a wheel or an hub to be braked in a manner that the rotatory braking element rotates conjointly with the wheel or hub. A stationary braking element that is stationary with respect and in contrast to the rotation of the rotatory braking element like a caliper with braking pads is mounted to a vehicle such that it basically remains stationary with respect to its chassis or - if the axle is a non rotating axle - with respect to a wheel axle of the vehicle. In such known related art braking systems, the braking pads and the caliper generate a clamping force that acts on the brake disc such that relative movement, in particular relative rotation between the brake disc and the braking pads are slowed down by friction between the brake disc and the braking pads. The force acting on the braking pads is generated via an eccentric lever and an actuator, e.g. a pneumatic actuator. In Fig. 1 and Fig. 2, such related art braking systems are shown. As it can be seen in Fig. 1, a pivotal axis 1 of an eccentric lever 2 extends in parallel to a horizontal caliper plane 3 that is a plane that extends tangentially to a brake disk 9 at the site of a caliper 4. The brake system further comprises an actuator 5 consisting of a service brake portion 6 and a parking brake portion 7 that are arranged in series in a common housing and that act along an actuator axis 8. The exact orientation of the pivotal axis 1 may vary by about 15°.

In an axial brake configuration as shown in Fig. 1, the actuator axis 8 is oriented in parallel to the horizontal caliper plane 3 and perpendicular with a disc center plane 10 that is a plane that extends in parallel to an extension of the brake disc 9, i.e. perpendicular to the rotational axis of the braking disc 9 and is located at the center of the braking disc 9. The exact orientation of the actuator axis 8 may vary by about 15°. In a radial brake configuration as shown in Fig. 2, an actuator 5' may be oriented such that its actuator axis 8' is oriented perpendicular to the horizontal caliper plane 3 and in parallel with a disc center plane 10. The exact orientation of the actuator axis 8 may vary by about 15°. In both cases, a bridge guidance 12 (not shown) of a bridge 11 is generally oriented perpendicular to the disc center plane 10.

The related art exhibits the problem that, due to the current arrangement, the braking system including the actuator consumes a significant axial installation space, i.e. a large space along the wheel axis, perpendicular to the disc center plane 10, in case of an axial brake. In case of a radial brake, a significant installation space in a radial direction is required. E.g., a "radial" brake cannot be mounted in 6 o'clock position with the actuator facing downwards, because the parking brake portion could collide with the road surface. Furthermore, it is not possible to separate the service brake portion 6 and parking brake portion 7 and arrange one portion on left and one portion on the right side of eccentric lever 2. This leads to a collision with the wheel rim in case of axial brake of Fig. 1 or to a collision with axle bodies in case of a radial brake. Furthermore, in case of an axial brake, the maximum size of the eccentric lever 2 is limited due to the space between knuckle and rim or axle and rim. Furthermore, in case of a radial brake, the minimum lever size is limited due to the wheel width including tires including snow chains and the actuator diameter.

It is an object of the invention to solve the problems of the related art and to provide a braking system that allows for providing braking systems requiring less space and having improved space requirements. In particular it is object of the invention to reduce axial and radial installation space especially if a parking brake function is needed and to avoid the need of a radial brake which is mostly used on front axles or so-called portal axles in city bus applications. Furthermore, the invention provides a solution to arrange the actuators closer to the caliper guidance in order to reduce the dynamic load on the guidance. Furthermore, the invention provides more flexibility to define the lever geometry in order to optimize ratio, progression and hysteresis of the brake mechanism. To reach improved flexibility, the ability of an offset (z-direction or x-direction) between the actuators is helpful. The object is solved by the subject-matter of the independent claims. Advantageous further developments are subject-matter of the dependent claims.

Disclosed is a braking system for a vehicle, comprising: a rotatory braking element that is fixedly connected to a wheel or wheel hub in a manner to rotate conjointly with the wheel having a rotational plane, a stationary braking element that is fixedly connected relative to a vehicle chassis such as not to rotate conjointly with the wheel, a first brake actuator that is configured to actuate the stationary braking element such as to urge the stationary braking element towards the rotatory braking element, a second brake actuator that is configured to actuate the stationary braking element such as to urge the stationary braking element towards the rotatory braking element, a lever that is configured such that it transfers a force exerted by the first brake actuator or the second brake actuator to the stationary brake element, wherein the first brake actuator is connected to the lever via a first connection portion and the second brake actuator is connected to the lever via a second connection portion such that the second brake actuator operates decoupled from the first brake actuator when the second brake actuator is actuated or that the first brake actuator operates decoupled from the second brake actuator when the first brake actuator is actuated.

Advantageously, the first brake actuator and the second brake actuator are arranged at mutually different sides of the lever.

Advantageously, a first brake actuator axis of the first brake actuator and a second brake actuator axis of the second brake actuator deviate from a mutual orientation that is parallel to each other.

Advantageously, the second brake actuator axis and the first brake actuator axis are arranged coaxially with an angle of 0° to 5°, 5° to 10° or 10° to 15°, preferably 5° with respect to the rotational plane.

Advantageously, a pivot axis of the lever is in parallel with a rotational plane of the rotatory braking element and perpendicular to a horizontal caliper plane that is a plane that is oriented tangentially of the rotatory brake element and/or an actuator axis is in parallel with the rotational plane and the horizontal caliper plane.

Advantageously, the first connection portion comprises a slit in which a portion of the lever or a portion of the second connection portion is slidably mounted.

Advantageously, the slit has at least partially a linear shape.

Advantageously, the slit has at least partially a curved shape.

Advantageously, the curved shape at least partially follows a lever end portion curve or a curve that is determined by the lever end portion curve.

Advantageously, the lever has a Y-shape and the first connection portion has a T-shape portion or ball-T-shape portion and the first connection portion is slidably mounted in a Y-slit of the lever.

Advantageously, the lever has an O-shape portion and the first connector portion has a T-shape portion or ball-T-shape portion, and the first connector portion is slidably mounted in the O-opening of the lever.

Advantageously, the lever has an I-shape portion and the first connector portion has an O-shape portion and the lever is slidably mounted in the O-opening of the first connector portion.

Advantageously, the lever has a T-shape portion and the first connector portion basically has a Y-shape and the lever s slidably mounted between the Y-legs of the first connector portion.

Advantageously, the lever has a T-shape and the first connector portion basically has an O-shape and the lever is slidably mounted in the O-opening of the first connector portion.

Advantageously, the lever has an I-shape and the first connector portion has a C-shape and the lever is slidably mounted below the C-shape of the first connector portion.

Advantageously, the lever has a T-shape and the first connector portion has a C-shape and the lever is slidably mounted and is engaged from the side from the C-shape of the first connector portion.

Advantageously, the first brake actuator is a parking brake actuator and the second brake actuator is a service brake actuator.

In the following, the invention is explained by means of embodiments and the figures.
**Figure 1** exhibits a braking system known from the related art.
**Figure 2** exhibits a further braking system known from the related art.
**Figure 3** exhibits a top view of a braking system according to an embodiment of the invention.
**Figure 4** exhibits an axial view / side view of the braking system according the embodiment.
**Figure 5** exhibits a first modification of the braking system according the embodiment.
**Figure 6** exhibits a second modification of the braking system according the embodiment.
**Figure 7** exhibits a detailed view of a lever of the embodiment.
**Figure 8** exhibits a schematic view of the movement of the lever by the service brake.
**Figure 9** exhibits a schematic view of the movement of the lever by the parking brake.
**Figures 10A** to **10C** exhibit variations of a parking brake rod connector of the embodiment.
**Figures 11A** to **11G** exhibit variations of connections of the lever and the actuators.

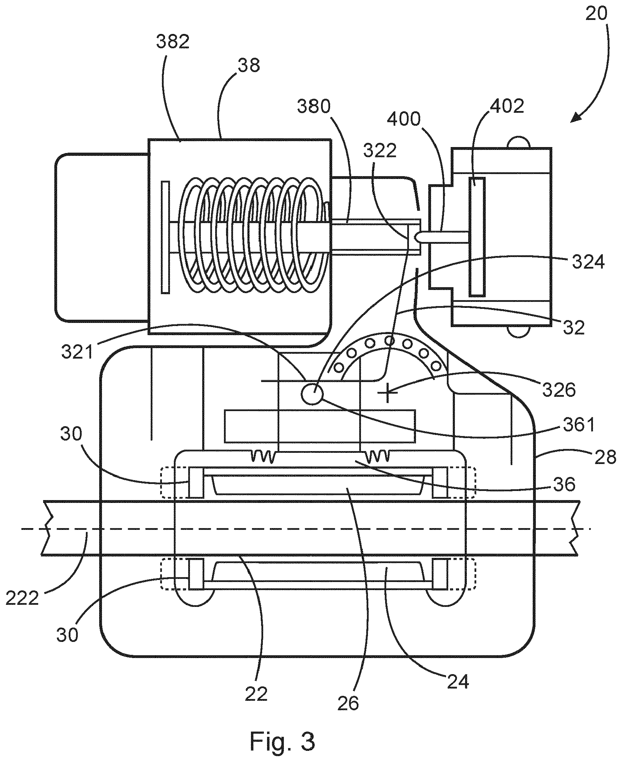

**Fig. 3** exhibits a braking system 20 according to an embodiment of the invention in a top down illustration. The braking system 20 comprises a brake disc 22 as a rotatory braking element having a disc center plane 222, and an outboard brake pad 24, an inboard brake pad 26 and a caliper 28 as stationary braking elements. The outboard brake pad 24 is supported in the caliper 28 by carriers 30 such that the outboard brake pad 24 is rigidly fixed in the caliper. The inboard brake pad 26 is supported in the caliper 28 by the carriers 30 such that it is movable towards and away from the brake disc 22. The caliper 28 and the brake pads 24, 26 are configured such as to form a floating caliper. A lever 32 comprises a shaft that is supported in a needle bearing 325. The center of the shaft and the needle bearing serve as a pivot axis 326 of the lever 32. The lever 32 further comprises a first end portion 321 that is connected to a bridge 35. The lever 32 transfers braking force to a brake slider 36 via the bridge 35. The bridge 35 is configured such as to be adjustable in the angle with which the bridge 35 may transfer force to the brake slider 36. The brake cylinder acts on the inboard braking pad 26. Although the braking system of the embodiment is configured as single piston system, also multi piston systems are applicable. The lever 32 comprises a second end portion 322 that is connected to a parking brake rod 380 on the one side and a service brake rod 400 at the other side.

A parking brake actuator 38 comprises the parking brake rod 380. The parking brake rod is urged toward an inwardly position by a spring arrangement 382 that is located inside the parking brake actuator 38. By that, the parking brake rod 380 and the lever 32 is urged towards a locking position in that braking is applied to the vehicle. In an operative state of the vehicle, the parking brake actuator 38 is kept in an extended configuration by a pneumatic pressure. By that, the parking brake rod 380 is urged towards an extended open position in that no braking is applied via the lever 32.

A service brake actuator 40 contains the service brake rod 400. By a pneumatic cylinder 402, the service brake rod 400 may be urged outwardly. By that, the lever 32 is urged towards an close position.

As it can be seen, the pivotal axis 326 of the lever 32 is oriented perpendicular to a horizontal caliper plane 42 that is a plane that is oriented in a tangential direction of the brake disc 22 at the location of the caliper 28. Deviations of the pivotal axis 326 from that orientation in any direction of up to 15° are possible.

As it can be further seen, the parking brake actuator axis 384 along the parking brake rod 380 and the service brake actuator axis 404 along the service brake rod 400 are arranged parallel to the disc center plane 222 and parallel to the horizontal caliper plane 42. Deviations of the actuator axes 384 and 404 from that orientation in any direction of up to 15° are possible.

Further, as it can be seen in Fig. 3, a service brake portion and a parking brake portion of an actuator may be separated and may be placed on both sides of the second end portion 322 of the lever 32 as the parking brake actuator 38 and the service brake actuator 40.

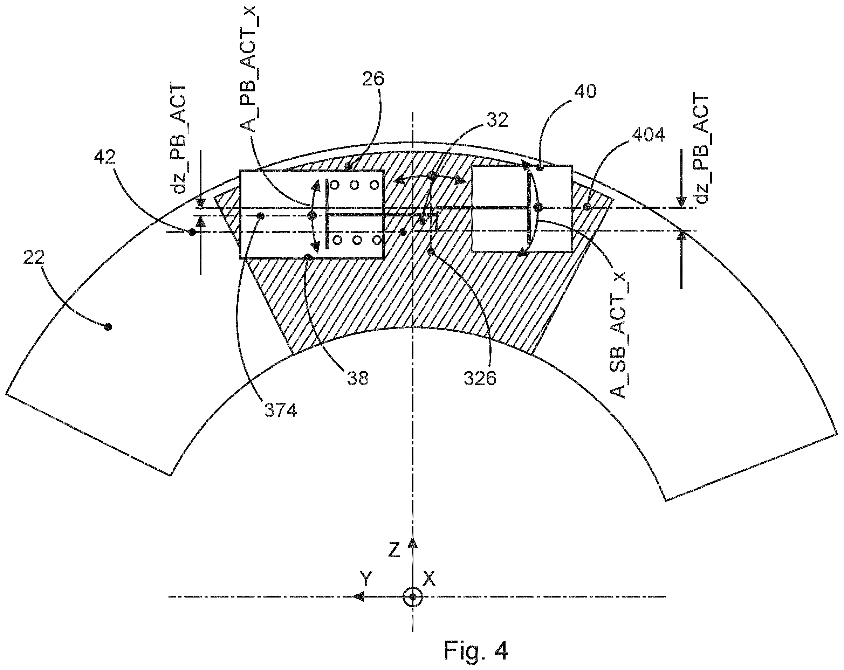

**Fig. 4** exhibits the braking system 20 of the embodiment of the invention in a side view.

In the embodiment, the parking brake actuator axis 384 and the service brake actuator axis 404 are parallel to each other.

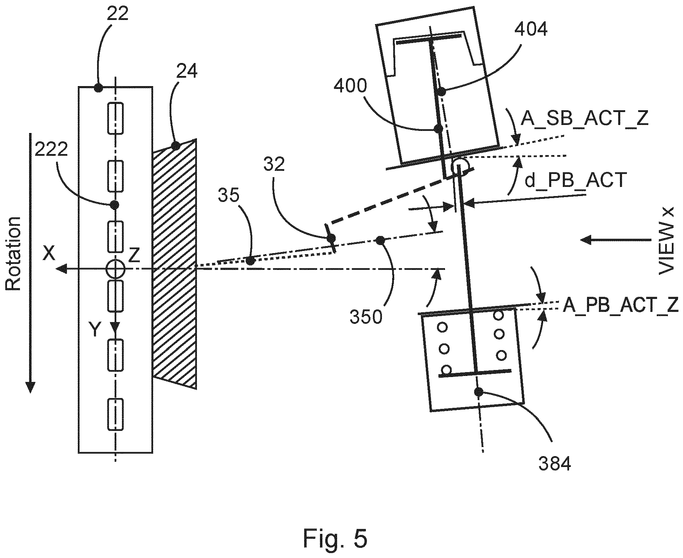

**Fig. 5** exhibits a first modification of the embodiment. In the embodiment, the bridge guide plane 350 of the bridge 35 that defines the direction of possible movement of the bridge 35, is oriented perpendicular to the disc center plane 222 in parallel with a wheel axle. However, with the arrangement of the embodiment, it is optionally possible to adjust the inclination of the bridge guide plane 350 to an angle different from perpendicular to the disc center plane 222.

Further the inclinations of the parking brake actuator axis 384 and the service brake actuator axis 404 may be varied with respect to the disc center plane 222 depending e.g. on the size of the parking brake actuator 38 and the service brake actuator 40 or other parts of the vehicle.

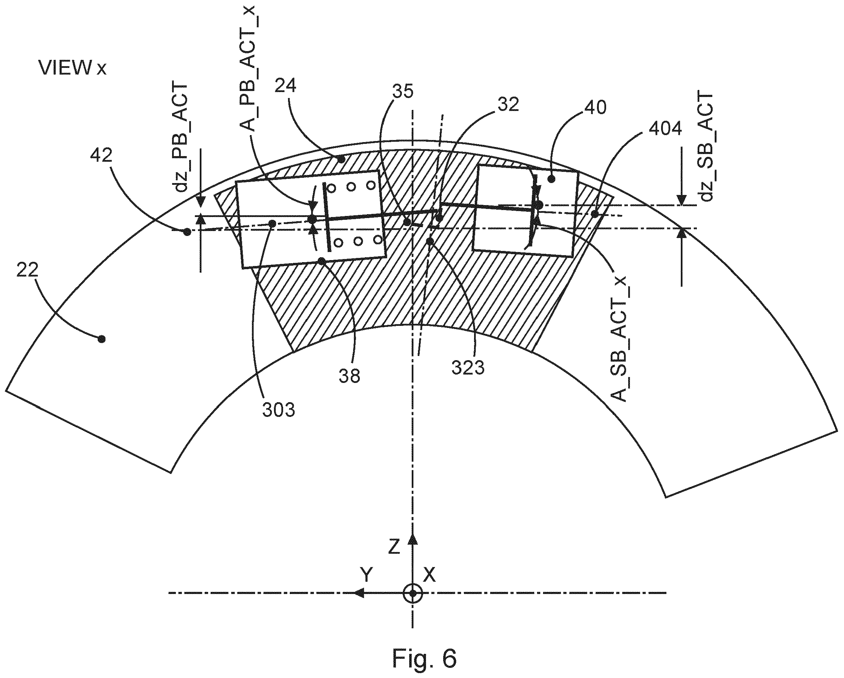

**Fig. 6** exhibits a second modification of the embodiment. As it can be seen, the axis of the parking brake actuator 38 and the service brake actuator 40 can have different inclination angles (A_SB_ACT_x and A_PB_ACT_x and A_SB_ACT_z and A_PB_ACT_z) or an offset between the parking brake actuator 38 and the service brake actuator 40 (dx_PB_ACT and dz_PB_ACT). The service brake actuator 40 can have an offset from neutral bridge plane 42 (horizontal caliper plane) which is representing the height of bridge / plunger (dz_SB_ACT).

In particular, the parking brake actuator 38 and the service brake actuator 40 may be arranged coaxial with an angle of 5° (A_SB_ACT_x and A_PB_ACT_x the bridge inclination is 4° (A_BRIDGE_GUIDE_NEUT) respectively to the rotation direction.

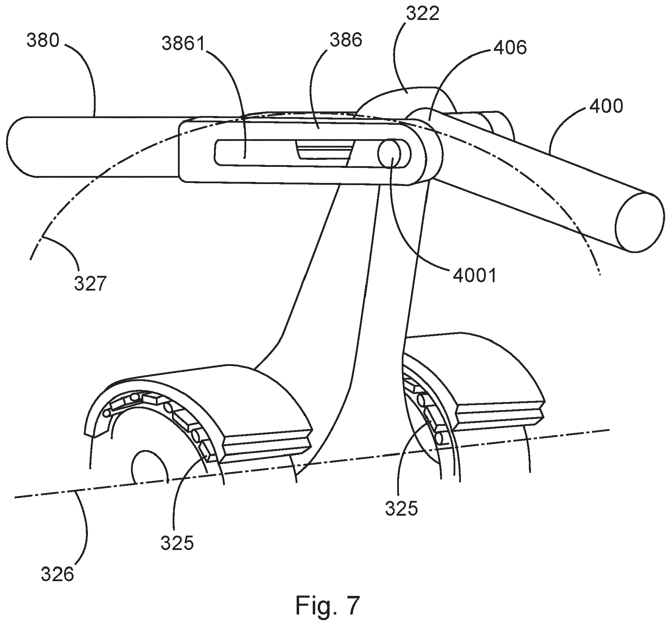

By means of **Fig. 7**, the lever 32 is described in more detail.

The lever 32 is supported by the needle bearings 325 and pivots about the pivot axis 326. During pivoting of the lever 32, the second end portion 322 follows a lever end portion curve 327. At the end portion 322, the lever is connected to the parking brake rod 380 via a parking brake rod connector 386, and is connected to the service brake rod 400 via a service brake rod connector 406. The parking brake rod connector 386 is shaped comprising a slit 3861 that guides a connection pin 4061of the service brake rod connector 406. When the service brake actuator 40 pushes the second end portion 322 of the lever 32 while the parking brake actuator 38 is biased by pneumatic pressure, the second end portion 322 may move along the lever end portion curve 327 without acting against the force of the parking brake actuator due to the movability of the connector pin 4061in the slit 3861.

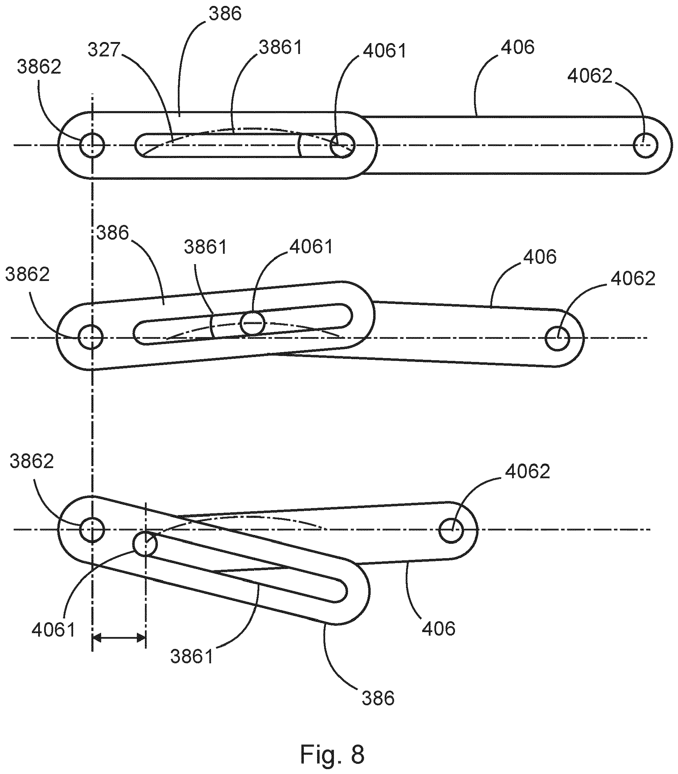

By means of **Fig. 8**, the movement of the second end portion 322 when actuated by the service brake actuator 40 is described in more detail.

The parking brake rod connector 386 is connected to the parking brake rod 380 such as to be pivotable about a parking brake pivot axis 3862. The service brake rod connector 406 is connected to the service brake rod 400 such as to be pivotable about a service brake pivot axis 4062.Thus, when the service brake rod 400 is pushed by the service brake actuator 40, the connection pin 4061 may follow a curve determined by the lever end portion curve 327.

Thus, a decoupling of the parking brake actuator 38 and the service brake actuator 40 is possible such that the service brake actuator 40 does not need to act against the biasing force of the parking brake actuator 38. This allows quick braking engagement, e.g. via an ABS system.

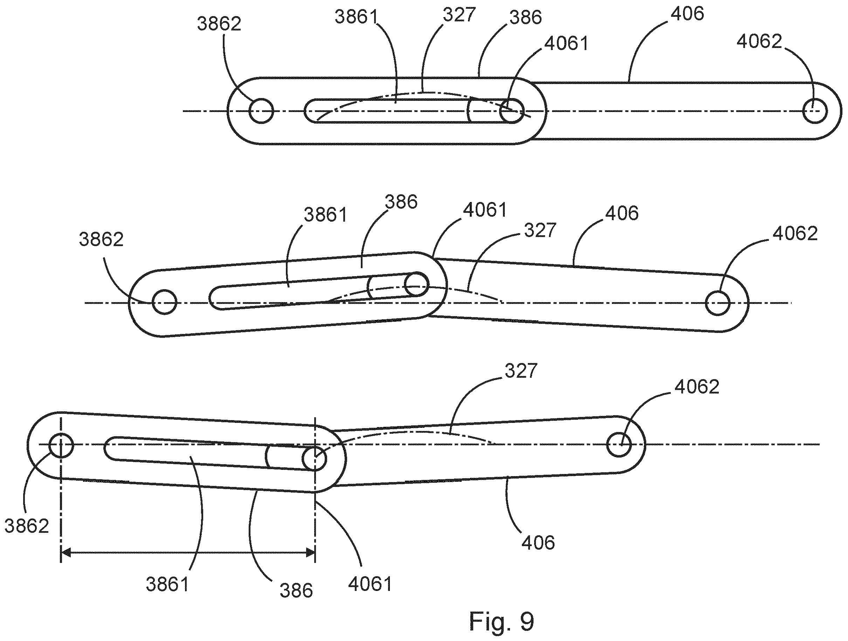

By means of **Fig. 9**, the movement of the second end portion 322 when actuated by the parking brake actuator 38 is described in more detail.

During actuation by the parking brake actuator 38, the service brake rod 400 is pulled out of the service brake actuator 40 via the service brake rod connector 406. Due to the parking brake pivot axis 3862 and the service brake pivot axis 4062, the connection pin 4061 may follow a curve determined by the lever end portion curve 327.

Unlike in Fig. 8, the actuators are not decoupled while actuation of the parking brake actuator 38. However, during parking brake actuator 38 actuation, it is not necessary to decouple the actuators, since the parking brake actuator 38 acts slowly and is e.g. not actuated via an ABS system.

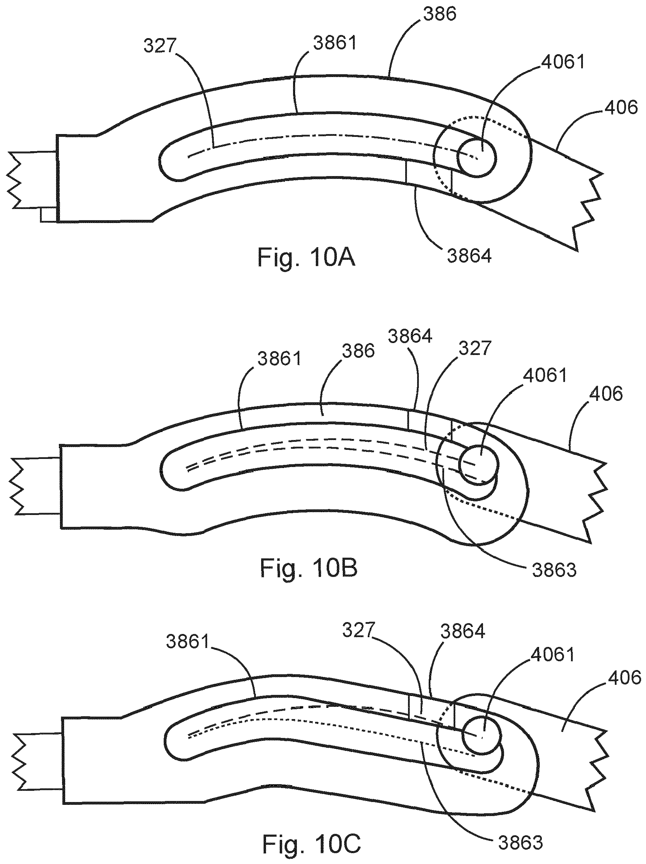

By means of **Figs. 10A-10C**, variations of a shape of the parking brake rod connector 386 are described.

In **Fig. 8**, the actuation by the service brake actuator 40 leads to an increased inclination of the parking brake rod connector 386 due to a small lever arm. Due to this inclination, collisions between the parking brake rod connector 386 and a housing or other brake parts may occur.

To prevent such a deflection of the parking brake rod connector 386, in **Fig. 10A**, the slit 3861 shaped in a curve that basically follows the lever end portion curve 327. Due to that shape, when the service brake actuator 40 is actuated, the connecting pin 4061 basically follows the slit 3861 and does not apply any or only small forces that may deviate the parking brake rod connector 406. During parking brake actuator 38 actuation, the parking brake rod connector 386 and the service brake rod connector 406 follow the lever end portion curve 327 as in Fig. 8.

However, since the parking brake rod connector 38 is not straight any more, when applying a pulling force, bending of the parking brake rod connector 38 may occur. It is therefore required to choose a stronger design, e.g. by applying more material or using sturdier material, for the parking brake rod connector 386.

In **Fig. 10B**, the parking brake rod connector 386 is arranged in a slightly displaced position with respect to the lever end portion curve 327 e.g. not properly fitting with the service brake rod connector 406 and connection pin 4061. In this case, the right-side end of a central line 3863 of the slit 3861is coaxial to the parking brake actuator axis 384 and deviates from the lever end portion curve 327. This aims to reduce the bending forces on the parking brake rod connector 386 during parking brake actuation. This reduction of the bending forces allows less material to be used for the parking brake rod connector 386, i.e. the parking brake rod connector 386 could be manufactured thinner or with less sturdy material.

As it can be seen from **Fig. 10B**, the lever end portion curve 327 and slit center line 3863 are partly different (offset). This means that in the beginning of the actuation of the service brake actuator 40, the parking brake rod connector 386 has a small inclination from its neutral axis. At the end of the service brake actuator 40 actuation, the slit center line 3863 and the lever end portion curve 327 match, and the parking brake rod connector 386 will be in its neutral position (i.e. along the parking brake actuator axis 384) again to achieve only a small or no parking brake rod connector 386 inclination.

In **Fig. 10C**, a further variation of the geometry of the slit 3861 is shown. Here, the slit center line 3863 has a linear end portion that leads to an even larger deviation of the slit center line 3863 from the lever end portion curve 327. This geometry allows an even further reduction of bending forces while maintaining a reduced deviation of the parking brake rod connector 386 when the parking brake actuator 38 is actuated.

In **Figs. 10A-10C**, the parking brake rod connector 386 comprises an assembling opening 3864. The assembling opening 3864 is intended to facilitate assembling/disassembling. After assembling, the assembling opening 3864 may be closed. This may be by a mechanism like a carabiner that allow the transfer of pulling force on both sides of the slit 3861, or such that only the unopened side of the slit allows the transfer of pulling force, e.g. closing by a sheet metal.

The embodiment and its variations disclose different variants for decoupling (and coupling again) during service and/or parking brake actuation.

The decoupling increases the efficiency of the system, especially for service brake actuations.

The embodiment optionally allows a reduced parking brake rod connector 386 inclination via a curved geometry of the slit 3861.

The embodiment optionally allows assembling/disassembling/service of the parking brake actuator.

To increase flexibility and reduce installation space, the two actuator interfaces may be placed on the same or different lever arm lengths as shown below. This allows different transmission ratios, different actuator diameters and therefore more actuator variants to be used.

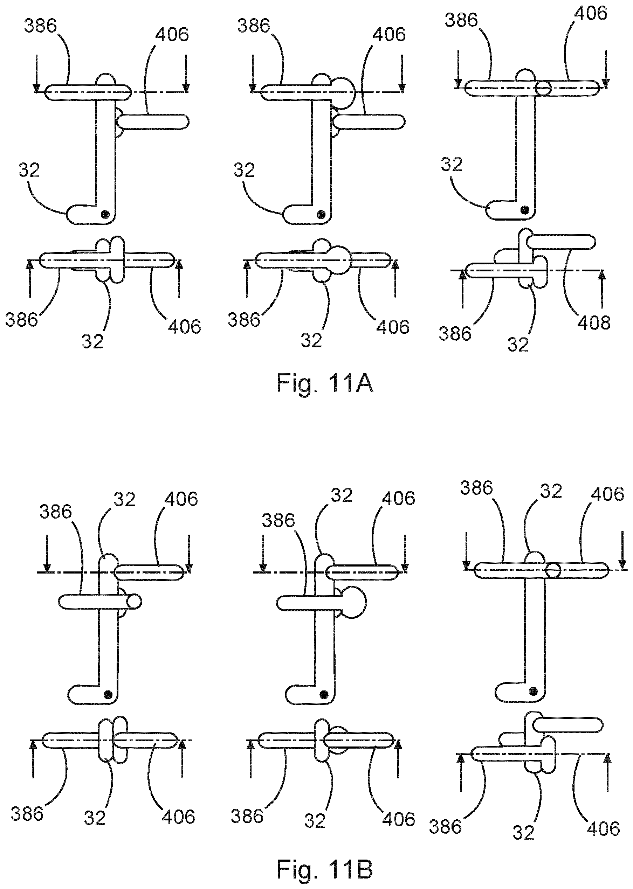

The possibility of applying an offset between the parking brake rod 380 and the service brake rod 400 in z-direction (asymmetric variants) as shown below, allows more flexibility for the actuator positions. By means of **Figs 11A - 11G**, variations of the lever 32, the parking brake rod connector 386 and the service brake rod connector 406 are shown. Figs. 11A - 11G display the lever 32 in a side view / axial view and in a top view. In these variants, the parking brake rod connector 386 and the service brake rod connector 406 are offset in a height direction or a side direction / axial direction. The amount of the offset may be varied. Deviations in the axial direction allow for a high flexibility for actuator positioning. Deviations in the height direction allow for more flexibility in the actuator positioning, actuator dimensioning and force/distance ratio optimization.

In **Fig. 11A** three examples are shown in that the lever 32 basically has a Y-shape and the parking brake rod connector 386 basically has a T-shape or ball-T-shape. The parking brake rod connector 386 is slidably mounted in the Y-slit of the lever 32, restricted by the T-portion.

In **Fig. 11B** three examples are shown in that the lever 32 basically has an O-shape and the parking brake rod connector 386 basically has a T-shape or ball-T-shape. The parking brake rod connector 386 is slidably mounted in the O-opening of the lever 32, restricted by the T-portion.

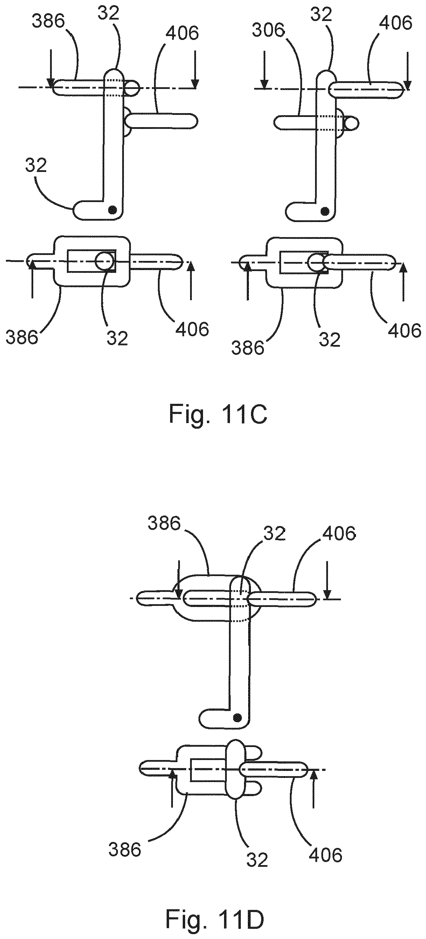

In **Fig. 11C** two examples are shown in that the lever 32 basically has an I-shape and the parking brake rod connector 386 basically has an O-shape. The lever 32 is slidably mounted in the O-opening of the parking brake rod connector 386.

In **Fig. 11D** an examples is shown in that the lever 32 basically has a T-shape and the parking brake rod connector 386 basically has a Y-shape. The lever 32 is slidably mounted between the Y-legs of the parking brake rod connector 386.

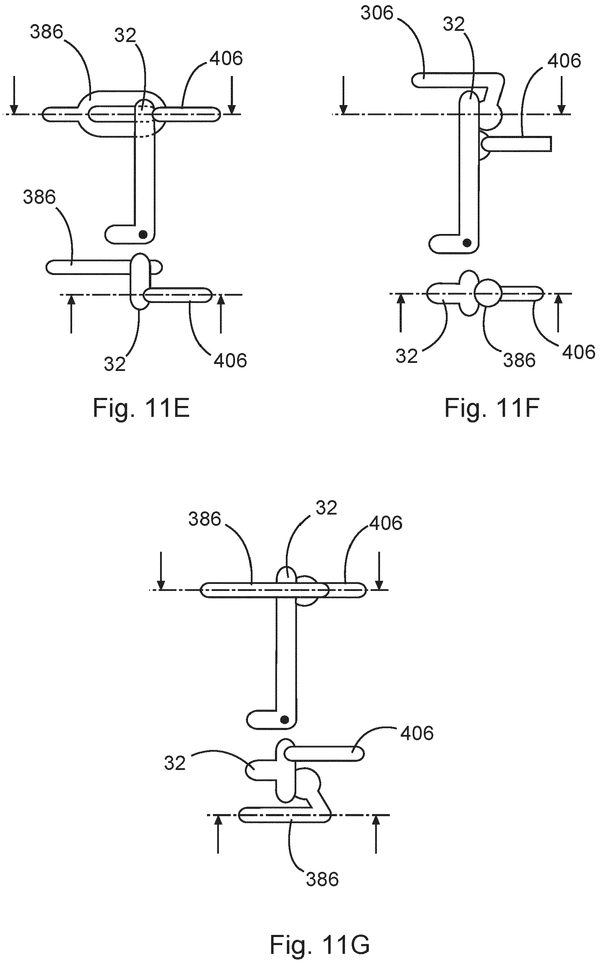

In **Fig. 11E** an examples is shown in that the lever 32 basically has a T-shape and the parking brake rod connector 386 basically has an O-shape. The lever 32 is slidably mounted in the O-opening of the parking brake rod connector 386.

In **Fig. 11F** an example is shown in that the lever 32 basically has an I-shape and the parking brake rod connector 386 basically has a C-shape. The lever 32 is slidably mounted below the C-shape of the parking brake rod connector 386.

In **Fig. 11G** an example is shown in that the lever 32 basically has a T-shape and the parking brake rod connector 386 basically has a C-shape. The lever 32 is slidably mounted and is engaged from the side from the C-shape of the parking brake rod connector 386.

The invention was described by means of an embodiment. The embodiment is only of explanatory nature and does not restrict the invention as defined by the claims. As recognizable by the skilled person, deviations from the embodiment are possible without leaving the invention that is defined according to the scope of the claimed subject-matter.

For example, as a service brake, a pneumatic brake was employed. However, also electromechanical or hydraulic brake systems may be employed there.

For example, the braking system comprises a specific orientation of the lever 32 and the actuators (38, 40). However, the invention is also applicable to other braking systems, in particular to conventional braking systems having member orientations as described in the related art in particular in this document.

For example, the parking brake actuator is configured as a pulling actuator and the service brake actuator is configured as a pushing actuator in the embodiment. However, also mere pushing actuators or pulling actuators or any mix of them may be applied mutatis mutandis.

For example, the caliper 28 is a floating caliper in the embodiment. However, any other kind of caliper is applicable, in particular fixed calipers.

Different embodiments may be combined. In particular the first modification and the second modification may be combined.

A commercial vehicle in the sense of this document is any vehicle, either self-driven or towed, for transporting goods or freight. These are in particular HGV, trucks, tractor units or trailers.

A main brake system or service brake system in the sense of this document is a brake system that is configured to serve for vehicle deceleration during operation, in particular during movement of the vehicle.

An auxiliary brake system/actuator or parking brake system/actuator in the sense of this document is a brake system/actuator that is configured to serve as a backup for the main brake system/actuator and that is configured to provide a continuous locking function to maintain a vehicle's position.

A horizontal caliper plane is a plane that extends tangentially of a brake disc at the location of the brake disc's caliper. Thus, the horizontal caliper plane is horizontal in a case when the caliper is arranged at a 12 o'clock position of the brake disc like in the embodiment. However, if the caliper is arranged at a different position, the horizontal caliper plane is not necessarily horizontal with respect to the usual orientation of the vehicle. In a case when the caliper is arranged at a 9 or 3 o'clock position of the brake disc, the horizontal caliper plane may be even oriented vertically.

In this document, as far as an axis is described as having a specific orientation, e.g. like being parallel to a disc center plane and a horizontal caliper plane, this description encompasses any orientation of that axis within a 15° angle range of deviation in any direction from that worded orientation.

In this document, a lever end portion curve is the path that an end portion of a lever takes when pivoted about its pivot axis.

In this document, a wheel axle - as far as a stationary braking element is connected thereto - refers to a non-rotating axle or - e.g. in case of a driven wheel - to a non-rotating part of the axle like an axle casing.

In this document, the terms "and", "or" and "either... or" are used as conjunctions in a meaning similar to the logical conjunctions "AND", "OR" (often also "and/or") or "XOR", respectively. In particular, in contrast to "either... or", the term "or" also includes occurrence of both operands.

Method steps indicated in the description or the claims only serve an enumerative purpose of the method steps. They only imply a given sequence or an order where their sequence or order is explicitly expressed or is - obvious for the skilled person - mandatory due to their nature. In particular, the listing of method steps do not imply that this listing is exhaustive. Also, not all method steps described in an embodiment are required to implement the invention. The required method steps are defined by the claims only.

In the claims, the word "comprising" does not exclude other elements or steps, and the indefinite article "a" or "an" does not exclude a plurality and has to be understood as "at least one".

### LIST OF REFERENCE SIGNS

- 1: pivotal axis
- 2: eccentric lever
- 3: horizontal caliper plane
- 4: caliper
- 5, 5': actuator
- 6: service brake portion
- 7: parking brake portion
- 8, 8': actuator axis
- 9: brake disc
- 10: disc center plane
- 11: bridge
- 12: bridge guidance (not shown)
- 20: braking system
- 22: brake disc
- 222: disc center plane
- 24: outboard brake pad
- 26: inboard brake pad
- 28: caliper
- 30: carrier
- 32: lever
- 321: first end portion
- 322: second end portion
- 324: support portion
- 325: needle bearing
- 326: pivotal axis
- 327: lever end portion curve
- 34: adjuster
- 35: bridge
- 350: bridge guide plane
- 36: brake slider
- 38: parking brake actuator
- 380: parking brake rod
- 382: spring arrangement
- 384: parking brake actuator axis
- 386: parking brake rod connector, first connector portion
- 3861: slit
- 3862: parking brake pivot axis
- 3863: slit center line
- 3864: assembling opening
- 40: service brake actuator
- 400: service brake rod
- 402: pneumatic cylinder
- 404: service brake actuator axis
- 406: service brake rod connector, second connector portion
- 4061: connection pin
- 4062: service brake pivot axis
- 42: horizontal caliper plane

## Claims

1. A braking system (20) for a vehicle, comprising:
a rotatory braking element (22) that is fixedly connected to a wheel or wheel hub in a manner to rotate conjointly with the wheel having a rotational plane (222),
a stationary braking element (24, 26) that is fixedly connected relative to a vehicle chassis or a wheel axle such as not to rotate conjointly with the wheel,
- a first brake actuator (38) that is configured to actuate the stationary braking element (24, 26) such as to urge the stationary braking element (24, 26) towards the rotatory braking element (22),
a second brake actuator (40) that is configured to actuate the stationary braking element (24, 26) such as to urge the stationary braking element (24, 26) towards the rotatory braking element (22),
a lever (32) that is configured such that it transfers a force exerted by the first brake actuator (38) or the second brake actuator (40) to the stationary brake element (24, 26), wherein
the first brake actuator (38) is connected to the lever (32) via a first connection portion (386) and the second brake actuator (40) is connected to the lever (32) via a second connection portion (406) such that the second brake actuator (40) operates decoupled from the first brake actuator (38) when the second brake actuator (40) is actuated or that the first brake actuator operates decoupled from the second brake actuator when the first brake actuator is actuated.

2. The braking system (20) according to the previous claim, wherein the first brake actuator (38) and the second brake actuator (40) are arranged at mutually different sides of the lever (32).

3. The braking system (20) according to the previous claim, wherein a first brake actuator axis (384) of the first brake actuator (38) and a second brake actuator axis (404) of the second brake actuator (40) deviate from a mutual orientation that is parallel to each other.

4. The braking system (20) according to any of claims 1 or 2, wherein the second brake actuator axis (404) and the first brake actuator axis (384) are arranged coaxially with an angle of 0° to 5°, 5° to 10° or 10° to 15°, preferably 5° with respect to the rotational plane (222).

5. The braking system (20) according to any of the previous claims, wherein a pivot axis of the lever (32) is in parallel with a rotational plane (222) of the rotatory braking element (22) and perpendicular to a horizontal caliper plane (42) that is a plane that is oriented tangentially of the rotatory brake element (22) and/or
an actuator axis (384, 404) is in parallel with the rotational plane (222) and the horizontal caliper plane (42).

6. The braking system (20) according to any one of the claims 1 to 5, wherein the first connector portion (386) comprises a slit (3861) in which a portion of the lever (32, 322) or a portion (4061) of the second connection portion (406) is slidably mounted.

7. The braking system (20) according to claim 6, wherein the slit (3861) has at least partially a linear shape.

8. The braking system (20) according to claim 6 or 7, wherein the slit (3861) has at least partially a curved shape.

9. The braking system according to claim 8, wherein the curved shape at least partially follows a lever end portion curve (327) or a curve that is determined by the lever end portion curve (327).

10. The braking system according to any of the previous claims, wherein the lever (32) has a Y-shape and the first connection portion (386) has a T-shape portion or ball-T-shape portion and the first connection portion (386) is slidably mounted in the Y-slit of the lever (32).

11. The braking system according any one of the claims 1 to 9, wherein the lever (32) has an O-shape portion and the first connection portion (386) has a T-shape portion or ball-T-shape portion and the first connector portion (386) is slidably mounted in the O-opening of the lever (32).

12. The braking system according any one of the claims 1 to 9, wherein the lever (32) has an I-shape portion and the first connector portion (386) has an O-shape portion and the lever (32) is slidably mounted in the O-opening of the first connector portion (386).

13. The braking system according any one of the claims 1 to 9, wherein the lever (32) has a T-shape portion and the first connector portion (386) basically has a Y-shape and the lever 32 is slidably mounted between the Y-legs of the first connector portion (386).

14. The braking system according any one of the claims 1 to 9, wherein the lever (32) has a T-shape and the first connector portion (386) basically has an O-shape and the lever (32) is slidably mounted in the O-opening of the first connector portion (386).

15. The braking system according any one of the claims 1 to 9, wherein the lever (32) has an I-shape and the first connector portion (386) has a C-shape and the lever (32) is slidably mounted below the C-shape of the first connector portion (386).

16. The braking system according any one of the claims 1 to 9, wherein the lever (32) has a T-shape and the first connector portion (386) has a C-shape and the lever (32) is slidably mounted and is engaged from the side from the C-shape of the first connector portion (386)

17. The braking system according to any one of the previous claims, wherein the first brake actuator (38) is a parking brake actuator and the second brake actuator (40) is a service brake actuator.
